# EUROPÄISCHE PATENTANMELDUNG

(11) **EP 2 463 815 A1**
(43) Veröffentlichungstag der Anmeldung: **13.06.2012**
(21) Anmeldenummer: 11192450.2
(22) Anmeldetag: 07.12.2011
(51) Int. Cl.: G06Q 10/08

(54) **Verfahren und System zur Bereitstellung von Daten und/oder Informationen betreffend Fleischprodukte über ein Datenübertagungsnetzwerk**

(30) Priorität: 08.12.2010 DE 102010061124
(71) Anmelder: Tönnies Holding GmbH & Co. KG, 33378 Rheda-Wiedenbrück (DE)
(72) Erfinder: Tönnies, Clemens, 33378 Rheda-Wiedenbrück (DE)
(74) Vertreter: Cohausz & Florack

(57) **Zusammenfassung**

Die Erfindung betrifft ein Verfahren sowie ein System zur Bereitstellung von Daten und/oder Informationen betreffend Fleischprodukte (1) an Benutzer-Geräten über ein Datenübertragungsnetzwerk (2), bei dem die Daten und/oder Informationen auf einem mit dem Datenübertragungsnetzwerk verbundenen Daten-Server zur Übermittlung an das jeweilige, in das Datenübertragungsnetzwerk (2) eingewählte Benutzer-Gerät gespeichert werden, und bei dem der Daten-Server (25) für die Bereitstellung der Daten und/oder Informationen über eine ihm zugeordnete Netzwerk-Adresse anwählbar ist. Bei den Benutzer-Geräten handelt es vorzugsweise um internetfähige Mobiltelefone. Das Verfahren umfasst folgende Schritte:
Erfassen der Herkunft eines geschlachteten Tieres (5), Speichern der Herkunftsdaten und des Schlachtdatums in einem mit einem Identifikationsmittel versehenen Datenspeicher (8), Transportieren des geschlachteten Tieres (5) mittels einer das Identifikationsmittel und den Datenspeicher (8) aufweisenden Aufhänge- oder Aufnahmevorrichtung (4) zu einer Tierkörperzerlegeeinrichtung (9), Speichern der Herkunftsdaten, des Schlachtdatums und des Zerlegedatums in einer auf dem Daten-Server (25) eingerichteten Datenbank (26), und Aufdrucken einer Chargennummer und/oder eines Strich- oder Matrix-Codes, der die Chargennummer und die dem Daten-Server (25) zugeordnete Netzwerk-Adresse beinhaltet, auf die Verpackung (22) des jeweiligen Fleischproduktes (1).

## Beschreibung

Die Erfindung betrifft ein Verfahren und ein System zur Bereitstellung von Informationen und/oder Daten betreffend für den Verkauf in Selbstbedienungsgeschäften bestimmte Fleischprodukte an Benutzer-Geräten über ein Datenübertragungsnetzwerk.

Es ist allgemein bekannt, an Arbeitsplatz- und Heimcomputern, die einen Internet-Zugang haben, über das Internet und von mit diesem verbundenen Daten-Servern Informationen über Waren abzurufen.

Insbesondere beim Kauf von fertig verpacktem Fleisch in Selbstbedienungsgeschäften möchten immer mehr Verbraucher wissen, woher das Fleisch stammt, und gegebenenfalls auch, wann es verarbeitet wurde.

Bekannt ist ein Internetportal mit der Bezeichnung "Codecheck", das sogenannte Apps, d.h. Anwendungsprogramme für Smartphones zur Verfügung stellt, mit denen sich der Benutzer eines Smartphones Produktinformationen zu verschiedenen Produkten auf dem Smartphone anzeigen lassen kann. Das Programm (App) sieht vor, dass mit der Kamera des Smartphones der Strichcode auf der Verpackung des interessierenden Produktes gescannt wird. Das Programm verbindet daraufhin das Smartphone mit einer Datenbank, in der Produktinformationen zu einer Vielzahl von Produkten gespeichert sind. Auf diese Weise kann sich der Benutzer der entsprechenden App mittels seines Smartphones Informationen insbesondere zu unterschiedlichen Lebensmitteln, z.B. Informationen zu Nährwerten, Inhaltsstoffen und Gütesiegeln anzeigen lassen.

Dieses bekannte System gibt Verbrauchern beim Fleischkauf jedoch insbesondere keine Antwort auf Fragen wie, woher stammt das vorliegende Fleisch und wer hat es wann verarbeitet.

Der vorliegenden Erfindung liegt die Aufgabe zugrunde, ein Verfahren und/oder System anzugeben, das Verbrauchern ermöglicht, sich zuverlässig und komfortabel über die Herkunft von Fleisch, und zwar eines dafür geschlachteten Tieres und über das Verarbeitungsdatum zu informieren.

Diese Aufgabe wird durch ein Verfahren mit den Merkmalen des Anspruchs 1 sowie durch ein System mit den Merkmalen des Anspruchs 14 gelöst.

Das erfindungsgemäße Verfahren, bei dem die Daten und/oder Informationen betreffend für den Verkauf in Selbstbedienungsgeschäften bestimmte Fleischprodukte auf wenigstens einem mit dem Datenübertragungsnetzwerk verbundenen Daten-Server zur Übermittlung an ein in das Datenübertragungsnetzwerk eingewähltes Benutzer-Gerät gespeichert werden, und bei dem der wenigstens eine Daten-Server für die Bereitstellung der Daten und/oder Informationen über eine ihm zugeordnete Netzwerk-Adresse anwählbar ist, umfassend die Schritte:
- Erfassen der Herkunft eines geschlachteten oder zu schlachtenden Tieres, aus dem nachfolgend die Fleischprodukte erzeugt werden,
- Speichern der erfassten Herkunftsdaten und des Schlachtdatums in einem mit einem Identifikationsmittel versehenen Datenspeicher,
- Transportieren des geschlachteten Tieres mittels einer das Identifikationsmittel und den Datenspeicher aufweisenden Aufhänge- oder Aufnahmevorrichtung zu wenigstens einer Tierkörperzerlegeeinrichtung,
- Erfassen des Zerlegedatums und der Eingangsuhrzeit des geschlachteten Tieres,
- Speichern der Herkunftsdaten, des Schlachtdatums und des Zerlegedatums des jeweiligen Tieres in wenigstens einer auf dem wenigstens einen Daten-Server eingerichteten Datenbank,
- Verpacken von durch die Zerlegung erhaltenen Fleischprodukten und/oder von nach der Zerlegung durch Weiterverarbeitung erhaltenen Wurstprodukten,
- Erzeugen einer Chargennummer und/oder eines Strich- oder Matrix-Codes, der die Chargennummer und die dem Daten-Server zugeordnete Netzwerk-Adresse beinhaltet, und
- Aufdrucken der Chargennummer und/oder des Strich- oder Matrix-Codes auf die Verpackung des jeweiligen Fleisch- oder Wurstproduktes.

Das erfindungsgemäße System zur Bereitstellung von Daten und/oder Informationen betreffend für den Verkauf in Selbstbedienungsgeschäften bestimmte Fleischprodukte an Benutzer-Geräten über ein Datenübertragungsnetzwerk ist dementsprechend im Wesentlichen gekennzeichnet durch
- wenigstens einen mit einem Datenübertragungsnetzwerk verbundenen Daten-Server, auf dem die Daten und/oder Informationen gespeichert sind, wobei der wenigstens eine Daten-Server für die Bereitstellung der Daten und/oder Informationen über eine ihm zugeordnete Netzwerk-Adresse anwählbar ist,
- eine elektronische Foto- oder Scannervorrichtung zum Erfassen eines an einem geschlachteten oder zu schlachtenden Tier angebrachten, eine Registriernummer beinhaltenden Herkunftskennzeichens,
- wenigstens eine ein Identifikationsmittel und einen Datenspeicher aufweisende Aufhänge- oder Aufnahmevorrichtung zum Transport eines geschlachteten Tieres zu einer Tierkörperzerlegeeinrichtung, wobei der Datenspeicher der Speicherung der Herkunftsdaten und des Schlachtdatums des jeweiligen Tieres dient,
- eine Zeiterfassungsvorrichtung zum Erfassen des Schlachtdatums und zum Einschreiben desselben in den Datenspeicher,
- eine Zeiterfassungsvorrichtung zum Erfassen des Zerlegedatums des geschlachteten Tieres,
- ein Lesegerät zum Erfassen des Identifikationsmittels und zum Lesen von Daten aus dem Datenspeicher, wobei das Lesegerät die ausgelesenen Daten in eine auf dem wenigstens einen Daten-Server eingerichtete Datenbank überträgt,
- eine Verpackungsvorrichtung zum Verpacken von durch Zerlegung erhaltener Fleischprodukte und/oder von nach Zerlegung durch Weiterverarbeitung erhaltener Wurstprodukte,
- eine Codierungsvorrichtung zum Erzeugen einer Chargennummer und/oder eines Strich- oder Matrix-Codes, der die Chargennummer und die dem Daten-Server zugeordnete Netzwerk-Adresse beinhaltet, und
- eine Druckervorrichtung zum Aufdrucken der Chargennummer und/oder des Strich- oder Matrix-Codes auf die Verpackung des jeweiligen Fleisch- oder Wurstproduktes.
Das erfindungsgemäße Verfahren sowie das erfindungsgemäße System bieten Verbrauchern die Möglichkeit, sich zuverlässig und komfortabel über die Herkunft des Tieres, von welchem das Fleisch stammt, und über das Schlachtdatum sowie das Zerlege-/Verarbeitungsdatum zu informieren.

Die Erfindung stellt eine einzigartige Lösung zur Verbraucher-Information in Bezug auf Fleischprodukte dar, die sich durch eine bisher nicht gekannte Informationstiefe hinsichtlich produktrelevanter Erzeugungsdaten auszeichnet. Die Erfindung kann dazu beitragen, das Verbraucher-Vertrauen in die Sicherheit des Lebensmittels Fleisch, insbesondre in frisches, für den Verkauf in Selbstbedienungsgeschäften verpacktes Fleisch nachhaltig zu fördern und signifikant zu erhöhen. Die Erfindung bietet zudem auch die Möglichkeit, im Falle eines eventuell erforderlichen Produktrückrufes aufgrund eines nachträglich festgestellten Qualitätsmangels, beispielsweise einer nachträglich festgestellten Tierseuche, die von dem Qualitätsmangel betroffenen Produkte gezielt und sicher zu identifizieren und somit den möglichen wirtschaftlichen Schaden zu begrenzen.

Unter dem Begriff "Fleischprodukt" sollen im vorliegenden Kontext nicht nur Fleischstücke wie etwa Steaks, sondern auch Wurstprodukte sowie Fleischstücke und/oder Wurst enthaltene Fertiggerichte verstanden werden.

Eine vorteilhafte Ausgestaltung des erfindungsgemäßen Verfahrens ist dadurch gekennzeichnet, dass zur Erfassung der Herkunft des Tieres ein an dem Tier angebrachtes, eine Registriernummer beinhaltendes Kennzeichen mittels einer elektronischen Foto- oder Scannervorrichtung erfasst wird. Auf diese Weise lässt sich eine sehr effektive und zuverlässige Einzeltiererfassung realisieren. Vorzugsweise ist die elektronische Foto- oder Scannervorrichtung dabei so ausgeführt, dass die Einzeltiererfassung automatisiert erfolgt. Es liegt jedoch auch im Rahmen der Erfindung, für diese Einzeltiererfassung eine als Handgerät ausgeführte elektronische Foto- oder Scannervorrichtung zu verwenden oder eine manuelle Pflege der Registriernummer vorzunehmen.

Eine weitere vorteilhafte Ausgestaltung des erfindungsgemäßen Verfahren besteht darin, dass als Datenspeicher zur Speicherung der erfassten Herkunftsdaten und des Schlachtdatums ein RFID-Transponder verwendet wird, der mit dem geschlachteten Tier mitgeführt wird. Mit RFID-Transpondern lassen sich geschlachtete Tierkörper, insbesondere Schweinehälften eindeutig kennzeichnen und automatisch identifizieren. RFID-Transponder lassen sich flüssigkeitsdicht kapseln, so dass sie für den Einsatz in feuchter Umgebung, insbesondere feuchtheißer Prozessumgebung geeignet sind. Sie sind zudem in einem weiten Bereich temperaturunempfindlich und eignen sich auch zum Mitführen an Tierkörperhälften in Kühl- oder Gefrierkammern. Des Weiteren baut ein RFID-Transponder relativ klein und benötigt für seine Funktion keine eigene Spannungsquelle, so dass er problemlos mit einem geschlachteten Tierkörper bzw. Tierkörperteil mitgeführt werden kann.

Nach einer weiteren bevorzugten Ausgestaltung des erfindungsgemäßen Verfahrens wird als Aufhänge- oder Aufnahmevorrichtung zum Transportieren des geschlachteten Tieres bzw. Tierkörperteiles ein Haken verwendet, der mit dem RFID-Transponder versehen ist. Der RFID-Transponder ist dabei vorzugsweise in dem Haken integriert und/oder fest mit dem Haken verbunden.

Nach einer weiteren bevorzugten Ausgestaltung des erfindungsgemäßen Verfahrens ist vorgesehen, dass eine veterinärmedizinische Untersuchung des lebenden Tieres und/oder eine Qualitätskontrolle von Fleisch des geschlachteten Tieres durchgeführt wird und die dabei ermittelten Befunddaten unter Zuordnung des Identifikationsmittels des RFID-Transponder erfasst und in der Datenbank gespeichert werden.

Um eine zuverlässige Zuordnung bzw. Rückverfolgbarkeit von durch Zerlegung eines Tierkörpers erhaltenen Fleisch-Teilstücken zu erreichen, sieht eine weitere vorteilhafte Ausgestaltung des erfindungsgemäßen Verfahrens vor, dass eingangs der wenigstens einen Tierkörperzerlegeeinrichtung, die mit einer bestimmten Stückgeschwindigkeit arbeitet, die Eingangszeit des jeweiligen geschlachteten Tieres erfasst wird, dass die durch Zerlegung erhaltenen Fleisch-Teilstücke in Transportbehälter gelegt und auf einer Palette gestapelt werden, dass nach Fertigstellung der Stapelung die Palette mit einem Etikett versehen wird, wobei auf dem Etikett ein Identifikationscode und die Uhrzeit der Fertigstellung der Stapelung aufgedruckt werden, und dass anhand der Stückgeschwindigkeit der Tierkörperzerlegeeinrichtung berechnet wird, welche Fleisch-Teilstücke von welchen geschlachteten Tieren stammen, und somit die Herkunft der Tiere der Palette zugeordnet wird.

Hinsichtlich einer Weiterverarbeitung der durch Zerlegung eines Tierkörpers erhaltenen Fleisch-Teilstücken ist eine weitere vorteilhafte Ausgestaltung des erfindungsgemäßen Verfahrens dadurch gekennzeichnet, dass die Palette einer mit einer bestimmten Maschinentaktung arbeitenden Weiterverarbeitungseinrichtung zugeführt wird, in der die Fleisch-Teilstücke zu Fleischprodukten weiterverarbeitet werden, dass das Etikett der Palette eingangs der Weiterverarbeitungseinrichtung gescannt wird und die gescannten Daten des Etiketts in der Datenbank gespeichert werden, und dass beim oder unmittelbar nach dem Verpacken der Fleischprodukte auf die jeweilige Verpackung zusätzlich zu der Chargennummer die Verpackungsuhrzeit aufgedruckt wird. Hierdurch wird eine zuverlässige Zuordnung der Fleischprodukte bzw. Rückverfolgbarkeit zu den dafür geschlachteten Tieren erzielt.

Die die Chargennummer und die Verpackungsuhrzeit umfassende Information wird dabei vorzugsweise zusätzlich in Form des Strich- oder Matrix-Codes auf die Verpackung aufgebracht.

Hinsichtlich einer zuverlässigen Rückverfolgbarkeit der Fleischprodukte ist es ebenfalls vorteilhaft, wenn nach einer weiteren Ausgestaltung des erfindungsgemäßen Verfahrens nach Abschluss eines Fertigungsauftrages eine Information über die bei der Ausführung des Fertigungsauftrages verwendeten Fleisch-Teilstücke in die Datenbank geschrieben wird, indem Daten, die auf dem Etikett der hierzu verwendeten, mit Fleisch-Teilstücken beladenen Palette enthalten sind, in die Datenbank geschrieben werden.

Eine weitere bevorzugte Ausgestaltung des erfindungsgemäßen Verfahrens sieht vor, dass das Verpackungsdatum des jeweiligen Fleischproduktes erfasst und in der Datenbank gespeichert wird.

Zu dem jeweiligen Fleischprodukt können grundsätzlich alle relevanten Erzeugungsdaten zu Veröffentlichungszwecken in einer Datenbank hinterlegt werden. Vorzugsweise wird in der Datenbank zusätzlich zum Schlachtdatum und zum Zerlegungsdatum des zur Herstellung des Fleischproduktes geschlachteten Tieres wenigstens eine der folgenden Informationen hinterlegt:
- der Ort der Herstellung des jeweiligen Fleischproduktes,
- eine Ortsliste und/oder wenigstens eine geografische Karte enthaltend den oder die Aufzuchtbetriebe, aus denen die Tiere stammen, die zur Herstellung der Fleischprodukte geschlachtet und verarbeitet werden,
- eine graphische Darstellung der Herkunft unterschiedlicher Tierfleisch-Teilstücke in Form einer typischen Tierartdarstellung mit abgegrenzten Tierkörperbereichen,
- ein Videofilm, der die Herstellung von Fleischportionen durch Schneiden eines Tierfleisch-Teilstückes in mehrere Fleischportionen zeigt, und
- mehrere Zubereitungsrezepte für das jeweilige Fleischprodukt.

Weitere bevorzugte und vorteilhafte Ausgestaltungen des erfindungsgemäßen Verfahrens und Systems sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: einen Herstellungsprozess von Fleisch- und/oder Wurstwaren in Verbindung mit einem erfindungsgemäßen System zur Bereitstellung von Daten und/oder Informationen betreffend so hergestellte Fleischprodukte an Benutzer-Geräten über ein Datenübertragungsnetzwerk;
- Fig. 2: eine Draufsicht auf eine für Selbstbedienungsgeschäfte bestimmte Frischfleisch-Verpackung;
- Fig. 3: eine Draufsicht auf eine Verpackung gemäß Fig. 2 und ein internetfähiges Benutzergerät, das eine integrierte Kamera und einen Bildschirm aufweist;
- Fig. 4: ein Beispiel einer Bildschirmanzeige auf dem Benutzergerät der Fig. 3;
- Fig. 5: ein weiteres Beispiel einer Bildschirmanzeige auf dem Benutzergerät der Fig. 3; und

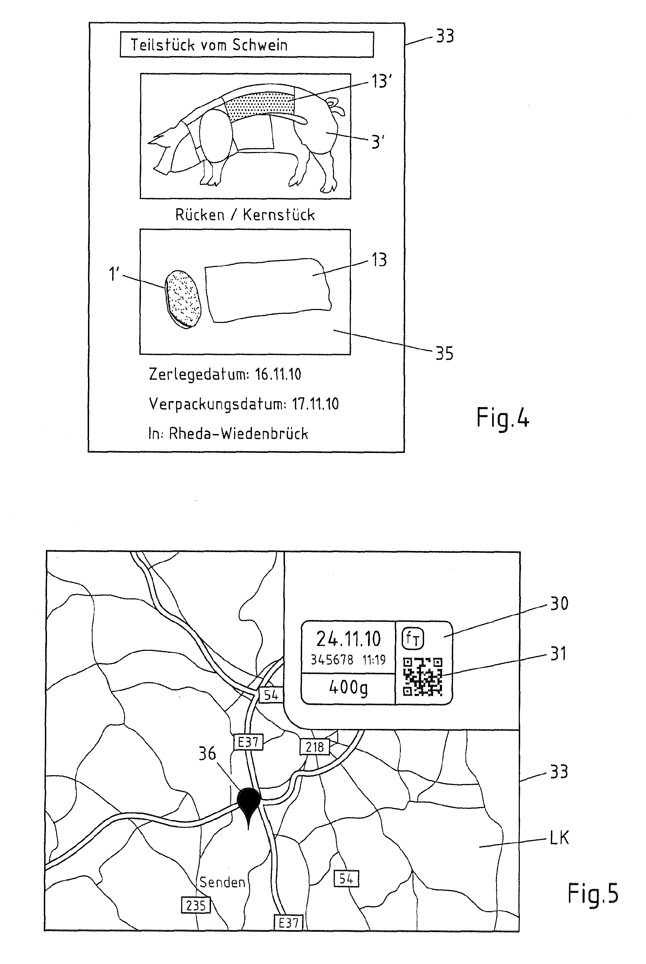

- Fig. 4: ein weiteres Beispiel einer Bildschirmanzeige auf einem anderen internetfähigen Benutzergerät, beispielsweise einem Heimcomputer.

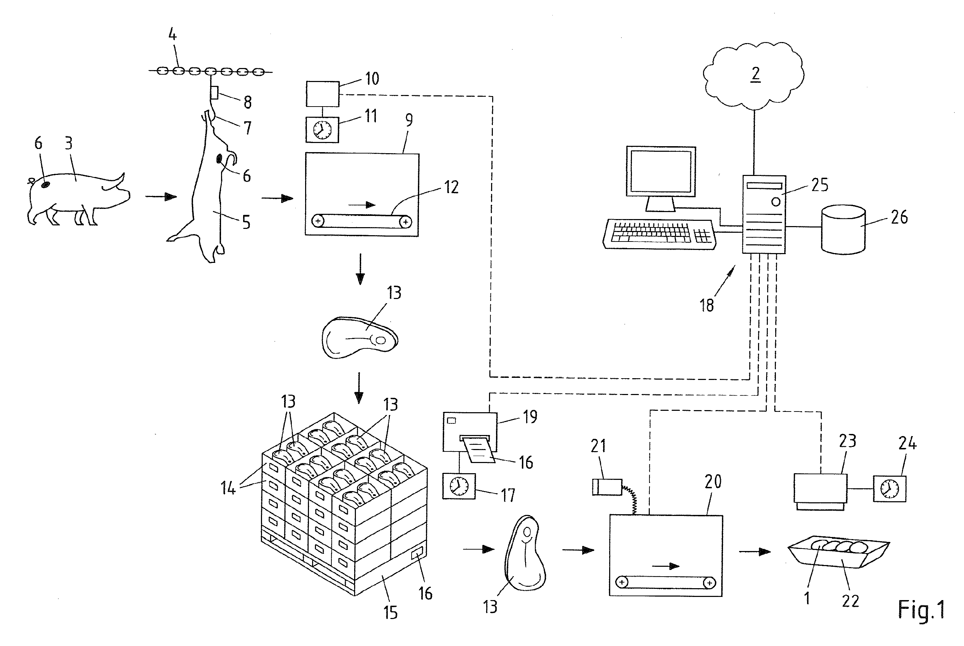

In Fig. 1 ist ein Prozess zur Fleischproduktion dargestellt, der mit einem erfindungsgemäßen System kombiniert ist, mit dem Daten und Informationen betreffend hergestellte Fleischprodukte 1 an Benutzer-Geräten über ein Datenübertragungsnetzwerk, vorzugsweise das Internet 2 bereitgestellt werden.

Vor der Schlachtung des jeweiligen Tieres 3 wird zuerst eine Schlachttieruntersuchung durch einen amtlichen Tierarzt durchgeführt. Durch diese Untersuchung des lebenden Schlachttieres, beispielsweise eines Schweins 3, soll festgestellt werden, ob es gesund und somit zur Schlachtung tauglich ist. Das Ergebnis dieser Untersuchung ist entweder eine Schlachterlaubnis oder ein Schlachtverbot bezüglich des untersuchten Tieres 3.

Zur Schlachtung freigegebene Schlachttiere 3, z.B. Schweine, werden sodann betäubt, sodass sie schnell und unter Vermeidung von Schmerzen oder Leiden in einen bis zum Tod anhaltenden Zustand der Empfindungs- und Wahrnehmungslosigkeit versetzt werden. Wenige Sekunden nach der Betäubung werden die Schlachttiere 3 an einer Rohrbahn 4 aufgehängt und durch einen Entblutungsschnitt getötet.

Anschließend wird der Schlachttierkörper 5 geöffnet und eine Fleischuntersuchung vorgenommen, um sicherzustellen, dass das Fleisch als Lebensmittel nur in den Handel gelangt, wenn es als tauglich zum Genuss für Menschen beurteilt worden ist. Bei der Fleischuntersuchung wird auch sichergestellt, dass alle nicht zum menschlichen Verzehr zugelassenen Tierkörperteile und Organe ordnungsgemäß beseitigt werden. Ergibt die Fleischuntersuchung keine Beanstandung, so wird der Schlachtkörper 5 durch Anbringen eines amtlichen Fleischuntersuchungsstempels als tauglich gekennzeichnet. Andernfalls wird er ordnungsgemäß als Konfiskat beseitigt.

Die Schlachtung erfolgt mittels maschineller Werkzeuge bzw. Roboter, z.B. mittels elektrisch angetriebener Bauch- und Brustbeinöffner und Tierkörperspalter, die aufeinanderfolgend in einer sogenannten Schlachtlinie angeordnet sind. Man spricht bezüglich solcher Schlachtlinien auch von Schlachtbändern.

Das erfindungsgemäße System basiert auf einer Einzeltiererfassung in der Schlachtung. Dabei wird mittels einer elektronische Foto- oder Scannervorrichtung jedes geschlachtete Tier, z.B. Schwein, am Schlachtband fotografiert und über das System die Herkunft des Schweins 3 festgestellt. Die Herkunft ergibt sich aus einem vom Landwirt bzw. Tierzüchter am Schlachttier 3 angebrachten Kennzeichen 6, das eine Registriernummer beinhaltet. Vorzugsweise wird die nach der Viehverkehrsverordnung (VVVO) vorgeschriebene Registriernummer (VVVO-Nr.) erfasst. Bei Schlachtschweinen 3 wird diese Kennzeichnung 6 in Form eines Schlagkennzeichens auf das jeweilige Schwein 3 auftätowiert. Bei Rindern wird diese Kennzeichnung dagegen üblicherweise in Form von Ohrmarken angebracht.

Das erfindungsgemäße System umfasst eine Aufhänge- oder Aufnahmevorrichtung 4 zum Transportieren eines oder mehrerer geschlachteter Tiere. Die Aufhänge- oder Aufnahmevorrichtung 4 besteht beispielsweise aus einer Rohrbahn. An der Aufhänge- oder Aufnahmevorrichtung 4 sind Haken 7 angebracht, an denen die Tierkörper 5 angehängt werden.

Der jeweilige Haken 7 ist mit einem ein Identifikationsmittel aufweisenden Datenspeicher versehenen. Das Identifikationsmittel und der Datenspeicher sind vorzugsweise in Form eines RFID-Transponders 8 ausgeführt. Die Haken 7 bzw. RFID-Transponder 8 sind fortlaufend nummeriert. Zu der fortlaufenden Nummer des Hakens 7 bzw. zugeordneten RFID-Transponders 8 wird sodann die laufende Nummer des Schweins 3 (Schlachttieres) und die Registriernummer des Landwirtes oder Tierzüchters gespeichert.

Alle weiteren Bearbeitungsschritte werden im fortlaufenden Prozess der Fleischproduktion über das Transponder-Identifikationsmittel (Transponder ID) am Haken 7 erfasst. Dazu gehören die Befunddaten der amtlichen Fleischuntersuchung sowie Rückverfolgungsdaten zum Eingang einer Tierkörperzerlegeeinrichtung 9 und zum Eingang eines Kühlhauses (nicht gezeigt) .

Eingangs der Tierkörperzerlegeeinrichtung 9 ist ein Lesegerät 10 zur Erfassung des dem Haken 7 zugeordneten Identifikationsmittels, also vorzugsweise ein RFID-Lesegerät angeordnet. Das Lesegerät 10 ist mit einer Zeiterfassungsvorrichtung 11 zum Erfassen der Eingangszeit des Schlachttierkörpers 5 in die Tierkörperzerlegeeinrichtung 9 versehen. Mit der Zeiterfassungsvorrichtung 11 wird die Eingangszeit sekundengenau erfasst.

Die Zerlegung der Tierkörper bzw. Schweinehälften 5 ist in eine Grobzerlegung und eine Feinzerlegung unterteilt. Dabei werden eine oder mehrere Zerlegbandanlagen 12 verwendet, die mit verschiedenen Eingliederungen wie Knochentransportbändern, Fleischtransportbändern und mit Kistentransportbändern ausgestattet sind.

Am Ende des Zerlegbandes 12 werden die durch die Zerlegung eines oder mehrerer Tierkörper 5 gewonnenen Fleisch-Teilstücke 13 in Transportbehälter (Kisten) 14 gepackt und auf eine Palette 15 gestapelt. Nach Fertigstellung der Stapelung wird die Palette 15 mit einem individuellen Etikett 16 gekennzeichnet, wobei auf dem Etikett 16 ein Identifikationscode und die Uhrzeit der Fertigstellung der Stapelung aufgedruckt werden. Hierbei wird die Uhrzeit der Fertigstellung der Stapelung sekundengenau erfasst und ebenfalls auf dem Etikett 16 registriert. Anhand der Stückgeschwindigkeit der Produktionslinie, welche die Tierkörperzerlegung auf dem Zerlegband 12 und die Fertigstellung einer Palette mit in Transportbehältern 14 gepackten Fleisch-Teilstücken 13 umfasst, lässt sich berechnen, welche Teilstücke 13 von welchem Schlachttier 3 bzw. welchen Tieren (Schweinen) 3 stammen. Auf diese Weise wird eine genaue Zuordnung der Herkunft des jeweiligen Schlachttiers 3 zu der fertig gestellten Palette erzielt. Der Identifikationscode, die Uhrzeit der Fertigstellung der Stapelung sowie die Herkunftsdaten des oder der Schlachttiere 3, von dem/denen die Fleischstücke auf der Palette stammen, wird auf dem Etikett 16 in Form eines Barcodes oder zweidimensionalen Matrixcodes aufgedruckt.

Der Tierkörperzerlegeeinrichtung 9 sind zu diesem Zweck eine weitere Zeiterfassungseinrichtung 17 und ein an dem Lesegerät 10 angeschlossener Prozessor (Rechner) 18 zugeordnet, der anhand der Eingangsuhrzeit eines zu zerlegenden Tierkörpers 5 in die Tierkörperzerlegeeinrichtung 9, der Komplettierungsuhrzeit einer Palette 15, die mit in der Tierkörperzerlegeeinrichtung 9 erhaltenen Fleisch-Teilstücken 13 beladen ist, und der Stückgeschwindigkeit, mit welcher die Tierkörperzerlegeeinrichtung 9 arbeitet, berechnet, von welchen Tieren 3 die auf der Palette 15 befindlichen Fleisch-Teilstücke 13 stammen. Mit 19 ist eine der Tierkörperzerlegeinrichtung 9 zugeordnete Etikettendruckvorrichtung bezeichnet, die an dem Prozessor 18 (Rechner) angeschlossen ist.

Die fertig beladene Palette 15 wird anschließend in eine Kühlkammer (nicht gezeigt) verbracht und dort für eine bestimmte Zeit zwischengelagert, damit das Fleisch reifen kann. Anschließend oder alternativ wird die mit Fleisch-Teilstücken 13 beladene Palette 15 mindestens einer nächsten Produktionsstufe (Weiterverarbeitungseinrichtung) 20, beispielsweise einer Einrichtung zur Feinzerteilung und/oder Wurstherstellung zugeführt.

Bei Beginn der Weiterverarbeitung des (gereiften) Fleisches in der wenigstens einen nächsten Produktionsstufe 20 (Weiterverarbeitungslinie) wird zunächst das Etikett 16 der Palette 15 mittels eines Scanners 21 abgetastet. Die Weiterverarbeitungseinrichtung 20 arbeitet mit einer vorgegebenen Maschinentaktung. Für jede Weiterverarbeitungslinie (Produktionsstufe) 20 ist je nach Maschinentaktung eine Verarbeitungszeit vom Auflegen des jeweiligen Fleisch-Teilstückes 13 bis zum Verpacken und Versiegeln einer das mindestens eine Fleischprodukt 1 aufnehmenden Verpackungsschale 22 festgelegt. Beim Versiegeln der Verpackungsschale 22 wird eine Chargennummer sowie die Verpackungsuhrzeit auf die Verpackung (Abdeckfolie) oder auf ein auf die Verpackung (Abdeckfolie) aufzubringendes Etikett aufgedruckt. Ein entsprechender Drucker sowie eine die Verpackungsuhrzeit erfassende Zeiterfassungseinrichtung sind in Fig. 1 mit den Bezugszeichen 23 bzw. 24 bezeichnet. Die Chargennummer stellt eine Auftragsnummer aus der Warenwirtschaft des Schlacht- und Fleischproduktionsunternehmens dar. Zusätzlich wird die die Chargennummer und die Verpackungsuhrzeit umfassende Information in Form eines StrichCodes oder eines zweidimensionalen Matrix-Codes auf die Verpackung aufgedruckt, der zudem eine Netzwerk-Adresse (URL-Adresse) eines am Internet 2 oder einem anderen Datenübertragungsnetzwerk angeschlossenen Daten-Servers 25 beinhaltet, auf dem eine Datenbank 26 eingerichtet ist, in der produktrelevante Daten bzw. Informationen zu den aus den Schlachttieren 3 hergestellten Fleischprodukten 1 gespeichert sind bzw. werden.

Nach Abschluss eines jeden Fertigungsauftrages wird in die Datenbank 26 insbesondere die Information über die bei dem Fertigungsauftrag verwendeten Rohstoffpaletten 15 und somit über die verarbeiteten Schlachttiere 3 geschrieben. In dieser Datenbank 26 sind bzw. werden zudem Zusatzinformationen hinterlegt, zum Beispiel der Ort der Herstellung des jeweiligen Fleischproduktes 1, eine Ortsliste und/oder wenigstens eine geografische Karte mit den Aufzuchtbetrieben, aus denen die verarbeiteten Schlachttiere 3 stammen, eine graphische Darstellung der Herkunft unterschiedlicher Tierfleisch-Teilstücke 13 in Form einer typischen Tierartdarstellung (z.B. eine schematische Darstellung eines Schweins) mit abgegrenzten Tierkörperbereichen, ein Videofilm, der die Herstellung von Fleischportionen 1' durch Schneiden eines Tierfleisch-Teilstückes 13 in mehrere Fleischportionen zeigt, und/oder Zubereitungsrezepte für das jeweilige Fleischprodukt 1.

Mittels eines Benutzer-Gerätes mit Internet- bzw. Netzwerkzugang, insbesondere Smartphones, hat ein Verbraucher die Möglichkeit, sich die in der Datenbank 26 gespeicherten produktrelevanten Daten bzw. Informationen anzeigen zu lassen. Dabei dienen die Chargennummer und die erfasste Verpackungsuhrzeit als Identifikationsschlüssel für einen Zugang zu der Datenbank 26. Über die Verpackungsuhrzeit wird die Palette 15 identifiziert, welche im Verarbeitungszeitraum gemäß Maschinentaktung verwendet wurde. Die geografische Anzeige der Aufzuchtbetriebe der verarbeiteten Schlachttiere 3 erfolgt beispielsweise unter Verwendung von Google Earth™ Kartenservice oder Google Maps™ Kartenservice auf Basis der Einzelerfassung der Schlachttiere 3, die in dem entsprechenden Zeitraum der Palette 15 zugeordnet wurden.

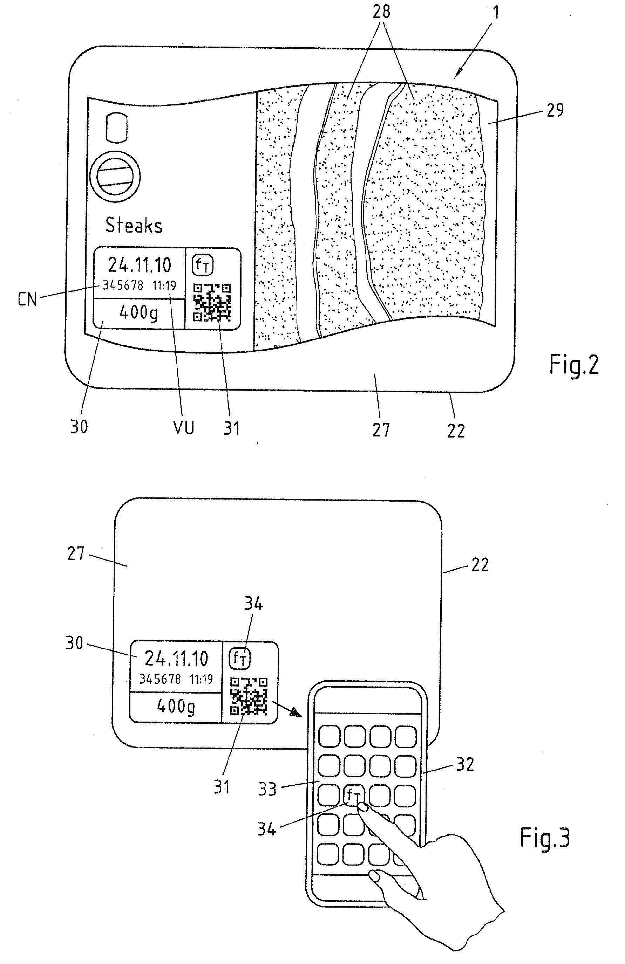

Fig. 2 zeigt eine Draufsicht auf eine mit einer Abdeckfolie 27 versiegelte Verpackungsschale 22, in der beispielsweise Steaks 28 verpackt sind. Auf der ein transparentes Sichtfenster 29 aufweisenden Abdeckfolie 27 ist ein Etikett 30 angebracht. Auf dem Etikett 30 sind ein Haltbarkeitsdatum, die Chargennummer CN und die Verpackungsuhrzeit VU sowie ein Matrix-Code 31 aufgedruckt. Der Matrix-Code 31 enthält in codierter Form ebenfalls die Chargennummer und die Verpackungsuhrzeit und zudem die dem Daten-Server 25 bzw. der Datenbank 26 zugeordnete Netzwerk-Adresse (URL Adresse).

Dem Nutzer eines Smartphones 32, d.h. eines eine Kamera und einen leistungsfähigen Prozessor aufweisenden Mobiltelefons, wird ein Anwendungsprogramm (eine sogenannte App) zur Installation auf dem Smartphone 32 zur Verfügung gestellt, welches sein Smartphone 32 in die Lage versetzt, am Verkaufsort eines erfindungsgemäß gekennzeichneten Fleischproduktes 1 alle wesentlichen herkunfts- und produktrelevanten Informationen, die erfindungsgemäß in der Datenbank 26 gespeichert sind, auf dem Bildschirm 33 des Smartphones 32 darzustellen. Das entsprechende Anwendungsprogramm (App) wird auf der Internetseite des Fleisch- und/oder Wurstproduzenten, eines Betreibers von Selbstbedienungsgeschäften und/oder auf einer speziellen themenbezogenen Internetseite zur Verfügung gestellt werden.

Das Mobiltelefon (Smartphone) 32 scannt bzw. erfasst mittels seiner integrierten Kamera den auf der Verpackung 22 gedruckten Matrix-Code 31 und stellt mittels des Anwendungsprogramms eine (Browser-)Verbindung zu der Datenbank 26 her. Hierzu betätigt der Benutzer (Verbraucher) ein auf dem Bildschirm oder Tastbildschirm 33 seines Mobiltelefons 32 angezeigtes Piktogramm oder Symbol 34 (sogenanntes Icon), das vorzugsweise auch auf der Verpackung 22 des erfindungsgemäß erfassten Fleischproduktes 1 aufgedruckt ist (vgl. Fig. 3).

Da in dem in der Datenbank 26 gespeicherten Daten-Stammsatz des betreffenden Fleischproduktes alle relevanten Herkunfts- und Herstellungsdaten erfasst sind, erhält der Benutzer des Anwendungsprogrammes mittels seines Mobiltelefons 32 direkt am Verkaufsort alle relevanten Auskünfte über die ihn interessierende Ware.

In Fig. 4 ist ein Beispiel für eine Informationsdarstellung auf dem Bildschirm 33 eines Mobiltelefons dargestellt. In diesem Fall hat der Verbraucher mit der Kamera seines Mobiltelefons unter Verwendung des Anwendungsprogramms den Matrix-Code 31 einer Schweinerückensteaks enthaltenen Verpackung 22 gemäß Fig. 2 gescannt. Auf dem Bildschirm 33 werden ein Schwein 3' und der Tierkörperbereich 13', aus dem die in der Verpackung 22 befindlichen Fleischprodukte 1 stammen, dargestellt. Ferner wird neben bzw. unterhalb dieser Darstellung der abgebildete Tierkörperbereich 13' zusätzlich durch Anzeige eines bzw. mehrerer entsprechender Begriffe ("Rücken / Kernstück") benannt. Zudem wird eine ein entsprechendes Fleisch-Teilstück 13 betreffende Herstellungsinformation dargestellt. Dies geschieht beispielsweise in Form eines kurzen Videofilms, der die Herstellung von Fleischportionen durch Schneiden eines Tierfleisch-Teilstückes in mehrere Fleischportionen zeigt (in Fig. 4 nicht dargestellt), und/oder in Form eines Bildes (Fotos) 35, das ein Teilstück 13 im Ganzen und ein oder mehrere von einem derartigen Teilstück 13 geschnittene Fleischscheiben 1' zeigt. Des Weiteren werden das Zerlegdatum des Schlachttieres, aus dem die konkreten Fleischstücke stammen, das Verpackungsdatum dieser Fleischstücke sowie der Ort der Herstellung dieser Fleischstücke auf dem Bildschirm 33 angezeigt (Fig. 4).

Darüber hinaus umfassen die zu dem konkreten Produkt abrufbaren Informationen auch eine Ortsliste und/oder eine Landkarte, in welcher der oder die Orte angegeben bzw. angezeigt sind, in denen sich die Zuchtbetriebe befinden, aus welchen die verarbeiteten Schlachttiere stammen. Gegebenenfalls genügt es, nicht alle, sondern eine beschränkte Anzahl der Orte anzuzeigen, in denen sich die Mastbetriebe befinden, aus denen die Schlachttiere der vorliegenden Produktcharge stammen. In Fig. 5 ist beispielhaft eine Landkarte LK dargestellt, auf der der Ort eines einzelnen Zuchtbetriebes durch ein Hinweissymbol 36 markiert ist. Die jeweilige Landkarte kann dabei beispielsweise aus Google Maps™ Kartenservice generiert werden. Auch kann dabei in die auf dem Bildschirm 33 dargestellte Landkarte LK gegebenenfalls das mit der Kamera des Mobiltelefons erfasste Etikett 30 mit dem Matrix-Code 31 eingeblendet werden (vgl. Fig. 5).

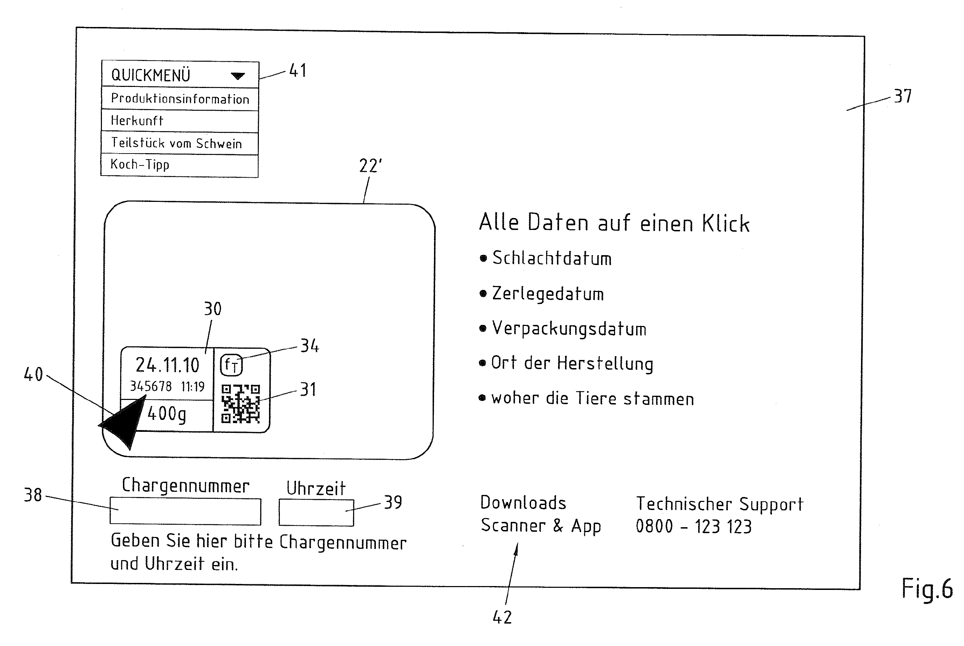

Zusätzlich oder alternativ zu der Möglichkeit, die Ware direkt am Verkaufsort (Selbstbedienungsgeschäft) mit der Kamera eines Mobiltelefons 32 zu scannen, kann der Verbraucher auch zuhause an einem Personalcomputer mit Internet-Zugang auf die in der Datenbank 26 gespeicherten Daten und Informationen zugreifen und sich diese auf dem Bildschirm des Personalcomputers anzeigen lassen. In Fig. 6 ist ein Beispiel einer speziellen themenbezogenen Internetseite 37 dargestellt, die Eingabefelder 38, 39 zum Eingeben der auf dem Etikett 30 der Verpackung 22 des Fleischproduktes aufgedruckte Chargennummer CN und Uhrzeit (Verpackungsuhrzeit) VU enthält. Durch das Bild 22' einer Verpackung mit einem Hinweiszeichen 40 wird dem Benutzer (Verbraucher) der Bereich des Verpackungsetiketts 30 angezeigt, wo sich die Chargennummer CN und Uhrzeit VU befindet. Nach Eingabe von Chargennummer und Uhrzeit kann sich der Verbraucher spezifische Informationen und Daten zu dem konkreten Fleischprodukt, insbesondere eine Information über dessen Herkunft abrufen. Zusätzlich zu den spezifischen Informationen und Daten betreffend das konkrete Fleischprodukt werden dem Verbraucher weitere produktrelevante Informationen zur Verfügung gestellt, zum Beispiel Koch-Tipps. Zum Abruf der interessierenden Daten bzw. Information klickt der Verbraucher mit dem Cursor auf das entsprechende Auswahlfeld in einem Auswahlmenü 41. Des Weiteren kann die Internetseite 37 ein Befehlsfeld 42 zum Herunterladen des oben bezüglich eines Mobiltelefons erwähnten Scanner- und Anwendungsprogramms enthalten. Außerdem ist auf der Internetseite 37 vorzugsweise auch noch eine Telefonnummer eines technischen Services angegeben, der dem Verbraucher bei technischen Problemen bezüglich des Anwendungsprogramms (App) hilft.

Die Ausführung der Erfindung ist nicht auf die vorstehend beschriebenen und in der Zeichnung dargestellten Ausführungsbeispiele beschränkt. Vielmehr sind zahlreiche Varianten des erfindungsgemäßen Systems denkbar, die auch bei abweichender Gestaltung von der in den beiliegenden Ansprüchen angegebenen Erfindung Gebrauch machen. So liegt es beispielsweise auch im Rahmen der Erfindung, Daten und/oder Informationen betreffend für den Verkauf in Selbstbedienungsgeschäften bestimmte Geflügelprodukte wie Hähnchenbrustfilets oder Gänsekeulen an Benutzer-Geräten über ein Datenübertragungsnetzwerk bereitzustellen.

## Patentansprüche

1. Verfahren zur Bereitstellung von Daten und/oder Informationen betreffend für den Verkauf in Selbstbedienungsgeschäften bestimmte Fleischprodukte an Benutzer-Geräten (32) über ein Datenübertragungsnetzwerk (2), bei dem die Daten und/oder Informationen auf wenigstens einem mit dem Datenübertragungsnetzwerk (2) verbundenen Daten-Server (25) zur Übermittlung an das jeweilige, in das Datenübertragungsnetzwerk eingewählte Benutzer-Gerät (32) gespeichert werden, und bei dem der wenigstens eine Daten-Server (25) für die Bereitstellung der Daten und/oder Informationen über eine ihm zugeordnete Netzwerk-Adresse anwählbar ist, umfassend die Schritte:
- Erfassen der Herkunft eines geschlachteten oder zu schlachtenden Tieres (3), aus dem nachfolgend die Fleischprodukte (1) erzeugt werden,
- Speichern der erfassten Herkunftsdaten und des Schlachtdatums in einem mit einem Identifikationsmittel versehenen Datenspeicher (8),
- Transportieren des geschlachteten Tieres (5) mittels einer das Identifikationsmittel und den Datenspeicher (8) aufweisenden Aufhänge- oder Aufnahmevorrichtung (4) zu wenigstens einer Tierkörperzerlegeeinrichtung (9),
- Erfassen des Zerlegedatums des geschlachteten Tieres,
- Speichern der Herkunftsdaten, des Schlachtdatums und des Zerlegedatums des jeweiligen Tieres in wenigstens einer auf dem wenigstens einen Daten-Server (25) eingerichteten Datenbank (26),
- Verpacken von durch die Zerlegung erhaltenen Fleischprodukten (1) und/oder von nach der Zerlegung durch Weiterverarbeitung erhaltenen Wurstprodukten,
- Erzeugen einer Chargennummer (CN) und/oder eines Strich- oder Matrix-Codes (31), der die Chargennummer (CN) und die dem Daten-Server (25) zugeordnete Netzwerk-Adresse beinhaltet, und
- Aufdrucken der Chargennummer (CN) und/oder des Strich- oder Matrix-Codes (31) auf die Verpackung (22, 27) des jeweiligen Fleisch- oder Wurstproduktes.

2. Verfahren nach Anspruch 1, **dadurch gekennzeichnet, dass** zur Erfassung der Herkunft des Tieres (3) ein an dem Tier angebrachtes, eine Registriernummer beinhaltendes Kennzeichen (6) mittels einer elektronischen Foto- oder Scannervorrichtung erfasst wird.

3. Verfahren nach Anspruch 1 oder 2, **dadurch gekennzeichnet, dass** als Datenspeicher zur Speicherung der erfassten Herkunftsdaten und des Schlachtdatums ein RFID-Transponder (8) verwendet wird, der mit dem geschlachteten Tier (5) mitgeführt wird.

4. Verfahren nach Anspruch 3, **dadurch gekennzeichnet, dass** als Aufhänge- oder Aufnahmevorrichtung zum Transportieren des geschlachteten Tieres ein Haken (7) verwendet wird, der mit dem RFID-Transponder (8) versehen ist.

5. Verfahren nach Anspruch 3 oder 4, **dadurch gekennzeichnet, dass** eine veterinärmedizinische Untersuchung des lebenden Tieres (3) und/oder eine Qualitätskontrolle von Fleisch des geschlachteten Tieres (5) durchgeführt wird und die dabei ermittelten Befunddaten unter Zuordnung des Identifikationsmittels des RFID-Transponder (8) erfasst und in der Datenbank (26) gespeichert werden.

6. Verfahren nach einem der Ansprüche 1 bis 5, **dadurch gekennzeichnet, dass** eingangs der wenigstens einen Tierkörperzerlegeeinrichtung (9), die mit einer bestimmten Stückgeschwindigkeit arbeitet, die Eingangszeit des jeweiligen geschlachteten Tieres (5) erfasst wird, dass die durch Zerlegung erhaltenen Fleisch-Teilstücke (13) in Transportbehälter (14) gelegt und auf einer Palette gestapelt werden, dass nach Fertigstellung der Stapelung die Palette (15) mit einem Etikett versehen wird, wobei auf dem Etikett (16) ein Identifikationscode und die Uhrzeit der Fertigstellung der Stapelung aufgedruckt werden, und dass anhand der Stückgeschwindigkeit der Tierkörperzerlegeeinrichtung (9) berechnet wird, welche Fleisch-Teilstücke (13) von welchen geschlachteten Tieren (3, 5) stammen, und somit die Herkunft der Tiere (3, 5) der Palette (15) zugeordnet wird.

7. Verfahren nach Anspruch 6, **dadurch gekennzeichnet, dass** die Palette (15) einer mit einer bestimmten Maschinentaktung arbeitenden Weiterverarbeitungseinrichtung (20) zugeführt wird, in der die Fleisch-Teilstücke (13) zu Fleischprodukten (1) weiterverarbeitet werden, dass das Etikett (16) der Palette (15) eingangs der Weiterverarbeitungseinrichtung (20) gescannt wird und die gescannten Daten des Etiketts (16) in der Datenbank (26) gespeichert werden, und dass beim oder unmittelbar nach dem Verpacken der Fleischprodukte (1) auf die jeweilige Verpackung (22, 27) zusätzlich zu der Chargennummer (CN) die Verpackungsuhrzeit (VU) aufgedruckt wird.

8. Verfahren nach Anspruch 7, **dadurch gekennzeichnet, dass** die die Chargennummer (CN) und die Verpackungsuhrzeit (VU) umfassende Information zusätzlich in Form des Strich- oder Matrix-Codes (31) auf die Verpackung (22, 27) aufgebracht wird.

9. Verfahren nach Anspruch 7 oder 8, **dadurch gekennzeichnet, dass** die Chargennummer (CN) und die erfasste Verpackungsuhrzeit (VN) als Identifikationsschlüssel für einen Zugang zu der Datenbank (26) verwendet werden.

10. Verfahren nach einem der Ansprüche 6 bis 9, **dadurch gekennzeichnet, dass** nach Abschluss eines Fertigungsauftrages eine Information über die bei der Ausführung des Fertigungsauftrages verwendeten Fleisch-Teilstücke (13) in die Datenbank (26) geschrieben wird, indem Daten, die auf dem Etikett (16) der hierzu verwendeten, mit Fleisch-Teilstücken (13) beladenen Palette (15) enthalten sind, in die Datenbank (26) geschrieben werden.

11. Verfahren nach einem der Ansprüche 1 bis 10, **dadurch gekennzeichnet, dass** das Verpackungsdatum des jeweiligen Fleischproduktes (1) erfasst und in der Datenbank (26) gespeichert wird.

12. Verfahren nach einem der Ansprüche 1 bis 11, **dadurch gekennzeichnet, dass** in der Datenbank (26) zusätzlich wenigstens eine der folgenden Informationen hinterlegt wird:
- der Ort der Herstellung des jeweiligen Fleischproduktes,
- eine Ortsliste und/oder wenigstens eine geografische Karte (LK) enthaltend den oder die Aufzuchtbetriebe, aus denen die Tiere (3) stammen, die zur Herstellung der Fleischprodukte geschlachtet und verarbeitet werden,
- eine graphische Darstellung der Herkunft unterschiedlicher Tierfleisch-Teilstücke in Form einer typischen Tierartdarstellung (3') mit abgegrenzten Tierkörperbereichen,
- ein Videofilm, der die Herstellung von Fleischportionen durch Schneiden eines Tierfleisch-Teilstückes in mehrere Fleischportionen zeigt, und
- mehrere Zubereitungsrezepte für das jeweilige Fleischprodukt.

13. Verfahren nach einem der Ansprüche 1 bis 12, **dadurch gekennzeichnet, dass** auf wenigstens einer Internetseite (37) ein herunterladbares Programm zur Verfügung gestellt wird, das ein mit einer Kamera ausgestattetes Mobiltelefon (32) als Benutzer-Gerät über das Datenübertragungsnetzwerk (2) mit der Datenbank (26) verbindet, wenn der Strich- oder Matrix-Code (31) auf der Verpackung (22, 27) des Fleischproduktes (1) mittels der Kamera des Mobiltelefon (32) erfasst wird.

14. System zur Bereitstellung von Daten und/oder Informationen betreffend für den Verkauf in Selbstbedienungsgeschäften bestimmte Fleischprodukte (1) an Benutzer-Geräten (32) über ein Datenübertragungsnetzwerk (2), insbesondere zur Durchführung des Verfahrens nach einem der Ansprüche 1 bis 13, **gekennzeichnet durch**
- wenigstens einen mit einem Datenübertragungsnetzwerk (2) verbundenen Daten-Server (25), auf dem die Daten und/oder Informationen gespeichert sind, wobei der wenigstens eine Daten-Server (25) für die Bereitstellung der Daten und/oder Informationen über eine ihm zugeordnete Netzwerk-Adresse anwählbar ist,
- eine elektronische Foto- oder Scannervorrichtung zum Erfassen eines an einem geschlachteten oder zu schlachtenden Tier (3) angebrachten, eine Registriernummer beinhaltenden Herkunftskennzeichens (6),
- wenigstens eine ein Identifikationsmittel und einen Datenspeicher (8) aufweisende Aufhänge- oder Aufnahmevorrichtung (4) zum Transport eines geschlachteten Tieres (5) zu einer Tierkörperzerlegeeinrichtung (9), wobei der Datenspeicher der Speicherung der Herkunftsdaten und des Schlachtdatums des jeweiligen Tieres (3) dient,
- eine Zeiterfassungsvorrichtung zum Erfassen des Schlachtdatums und zum Einschreiben desselben in den Datenspeicher,
- eine Zeiterfassungsvorrichtung (11) zum Erfassen des Zerlegedatums des geschlachteten Tieres (5),
- ein Lesegerät (10) zum Erfassen des Identifikationsmittels und zum Lesen von Daten aus dem Datenspeicher, wobei das Lesegerät (10) die ausgelesenen Daten in eine auf dem wenigstens einen Daten-Server (25) eingerichtete Datenbank (26) überträgt,
- eine Verpackungsvorrichtung zum Verpacken von **durch** Zerlegung erhaltener Fleischprodukte (1) und/oder von nach Zerlegung **durch** Weiterverarbeitung erhaltener Wurstprodukte,
- eine Codierungsvorrichtung zum Erzeugen einer Chargennummer (CN) und/oder eines Strich- oder Matrix-Codes (31), der die Chargennummer (CN) und die dem Daten-Server (25) zugeordnete Netzwerk-Adresse beinhaltet, und
- eine Druckervorrichtung (23) zum Aufdrucken der Chargennummer (CN) und/oder des Strich- oder Matrix-Codes (31) auf die Verpackung (22, 27) des jeweiligen Fleisch- oder Wurstproduktes.

15. System nach Anspruch 14, **dadurch gekennzeichnet, dass** der mit dem geschlachteten Tier (5) mitgeführte Datenspeicher ein RFID-Transponder (8) ist, wobei das Lesegerät (10) ein RFID-Lesegerät ist.

16. System nach Anspruch 15, **dadurch gekennzeichnet, dass** die Aufhänge- oder Aufnahmevorrichtung (4) zum Transportieren eines geschlachteten Tieres (5) einen Haken (7) aufweist, der mit dem RFID-Transponder (8) versehen ist.

17. System nach einem der Ansprüche 14 bis 16, **dadurch gekennzeichnet, dass** das Lesegerät (10) eingangs der Tierkörperzerlegeeinrichtung (9) angeordnet ist.

18. System nach einem der Ansprüche 14 bis 17, **dadurch gekennzeichnet, dass** der Tierkörperzerlegeeinrichtung (9) ein an dem Lesegerät (10) angeschlossener Prozessor (18) zugeordnet ist, der anhand einer Eingangsuhrzeit eines zu zerlegenden Tierkörpers (5) in der Tierkörperzerlegeeinrichtung (9), einer Komplettierungsuhrzeit einer Palette (15), die mit durch Zerlegen in der Tierkörperzerlegeeinrichtung (9) erhaltenen Fleisch-Teilstücken (16) beladen ist, und einer Stückgeschwindigkeit, mit welcher die Tierkörperzerlegeeinrichtung (9) arbeitet, berechnet, von welchen Tieren (3) die auf der Palette (15) befindlichen Fleisch-Teilstücke (13) stammen.

19. System nach Anspruch 18, **dadurch gekennzeichnet, dass** der Tierkörperzerlegeeinrichtung (9) eine an dem Prozessor (18) angeschlossene Etikettendruckvorrichtung (19) zugeordnet ist.

20. System nach einem der Ansprüche 14 bis 19, **gekennzeichnet durch** wenigstens eine mit einer bestimmten Maschinentaktung arbeitenden Weiterverarbeitungseinrichtung (20) zum Feinzerlegen und/oder Weiterverarbeiten von in der Tierkörperzerlegeeinrichtung gefertigten Fleisch-Teilstücken (13), wobei die Weiterverarbeitungseinrichtung (20) mit einem Scanner (21) zum Erfassen von Barcode- oder Matrixcode-Etiketten (16) ausgerüstet ist.
